Europäisches Patentamt

European Patent Office

Office européen des brevets

(11) Numéro de publication: **0 170 644**
**A1**

# (12) DEMANDE DE BREVET EUROPEEN

(21) Numéro de dépôt: **85870091.7**

(22) Date de dépôt: **24.06.85**

(51) Int. Cl.⁴: **G 06 F 1/00**

(30) Priorité: **03.07.84 BE 213260**

(43) Date de publication de la demande:
**05.02.86 Bulletin 86/6**

(84) Etats contractants désignés:
**AT BE CH DE FR GB IT LI LU NL SE**

(71) Demandeur: **N.V. WILLY MICHIELS AND COMP.**
**Wijngaardstraat 36**
**B-9451 Haaltert-Kerksken(BE)**

(72) Inventeur: **Franck, Jean-Claude Julien**
**Chemin de Gelée, 144**
**B-4650 Herve-Chaineux(BE)**

(74) Mandataire: **De Brabanter, Maurice et al,**
**Bureau VANDER HAEGHEN 63 Avenue de la Toison d'Or**
**B-1060 Bruxelles(BE)**

(54) Dispositif de détection anti-effraction.

(57) On protège un appareil de jeu électronique professionel contre les effractions en montant sur celui-ci un dispositif comportant un ensemble (1) de contacts électriques (1', 1", 1'") normalement ouverts qui, dès qu'ils détectent une effraction, enclanchent un relais de commande qui détruit les données contenues dans une mémoire non volatile RAM CMOS (1).

Ladite mémoire est raccordée par un bus (7) bidirectionnel à 8 bits à un microprocesseur central du jeu (6) apte à accéder à un dispositif de réarmement à l'aide d'une clé électronique (8').

EP 0 170 644 A1

./...

Croydon Printing Company Ltd.

FIG. 1

0170644

La présente invention concerne un dispositif de détection anti-effraction comportant un ensemble de contacts électro-magnétiques normalement ouverts, disposés aux endroits critiques d'effraction et raccordés en parallèle, par l'intermédiaire d'une source d'alimentation, à un relais de commande d'un dispositif de verrouillage et/ou d'avertissement, constitué d'une mémoire statique non volatile à accès aléatoire RAM C MOS 1, éventuellement alimentée par une batterie indépendante du réseau.

Elle trouve sa principale application dans les dispositifs de protection d'un jeu électronique professionnel et est destinée à interrompre le déroulement normal du programme du jeu et à le bloquer en cas d'effraction ou tentative de fraude.

L'invention vise à faciliter la remise en action du jeu et propose d'insérer une clé électronique dans un connecteur situé à l'intérieur du jeu.

Elle est relative à un dispositif de détection anti-effraction comportant un ensemble de contacts électromagnétiques normalement ouverts, disposés aux endroits critiques d'effraction et raccordés en parallèle, par l'intermédiaire d'une source d'alimentation, à un relais de commande d'un dispositif de verrouillage et/ou d'avertissement, constitué d'une mémoire statique non volatile à accès aléatoire RAM C MOS 1, éventuellement alimentée par une batterie indépendante du réseau, essentiellement caractérisé en ce que ladite mémoire est raccordée par un bus bidirectionnel à 8 bits à un microprocesseur central du jeu apte à accéder à un dispositif de réarmement à l'aide d'une clé électronique.

Suivant une particularité de l'invention, le dispositif comporte un ensemble comprenant une clé électronique constitué par un réseau logique programmable et un connecteur constitué par un EPROM serrure décrivant de façon scriptée les algorithmes et les paramètres d'algorithmes de programmation du réseau logique de ladite clé .

Dans une forme de réalisation particulière, la clé électronique est un réseau logique programmable comportant des bistables.

D'autres particularités et détails de l'invention apparaîtront au cours de la description détaillée des dessins annexés au présent mémoire et qui montrent schématiquement et à titre illustratif, non limitatif, une forme de réalisation d'un dispositif de protection suivant l'invention.

Dans ces dessins :
- la figure 1 montre le schéma de principe d'une forme particulière de réalisation de l'invention;

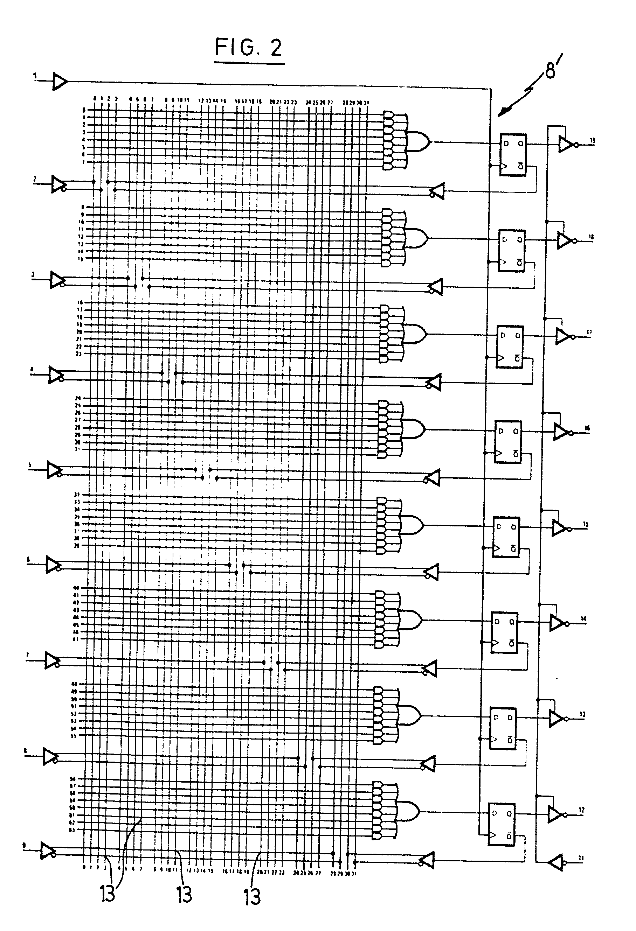

- la figure 2 montre les connections particulières d'une mémoire monolytique du type PAL constituant une clé électronique.

Dans ces dessins, les mêmes notations de référence désignent des éléments identiques ou analogues.

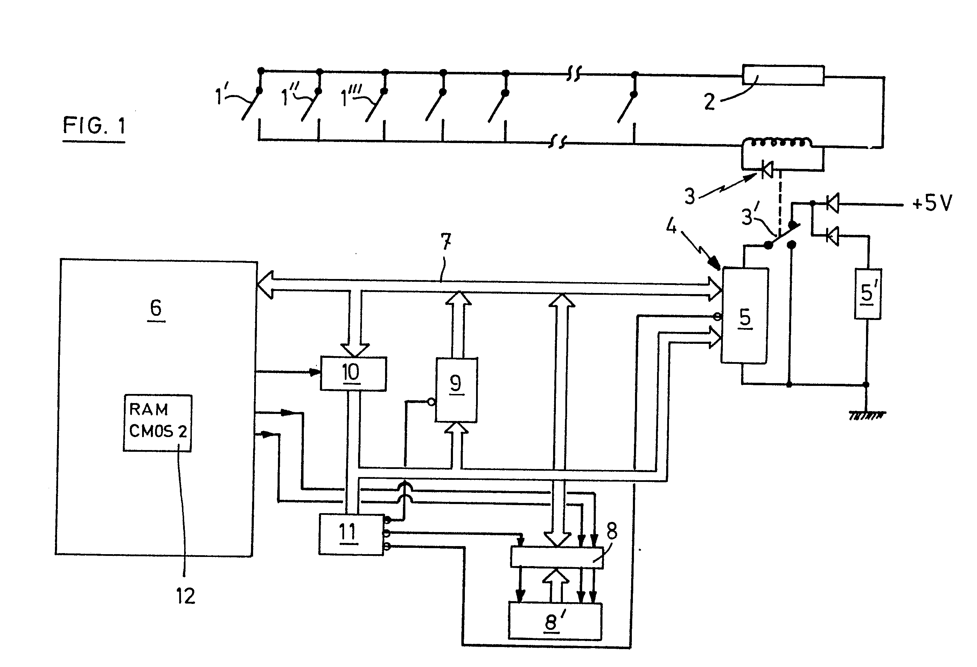

Comme illustré à la figure 1, un dispositif de détection anti-effraction suivant l'invention, comporte un ensemble, désigné par la notation de référence 1, de contacts électriques 1', 1", 1'" normalement ouverts, disposés aux endroits critiques d'effraction d'un jeu électronique professionnel et raccordés en parallèle, par l'intermédiaire d'une source d'alimentation 2, à un relais de commande 3 d'un dispositif de verrouillage 4 et/ou d'avertissement.

Le dispositif de verrouillage 4 est constitué d'une mémoire statique 5 non volatile, à accès aléatoire RAM C-MOS 1, alimentée par le réseau et par une batterie indépendante 5'. La mémoire statique 5 est reliée à un microprocesseur central du jeu 6 par un bus 7 bidirectionnel à 8 bits, qui permet audit microprocesseur d'accéder, grâce à des signaux discrets de contrôle, aux composants suivants :
- un connecteur 8 destiné à recevoir une clé électronique 8';
- une mémoire 9 effaçable ROM ou EPROM;
- un circuit intégré de commande LATCH 10;
- une logique interne de chips de sélection 11.

Le microprocesseur central du jeu 6 effectue la lecture ou l'écriture à une adresse quelconque de la mémoire statique RAM CMOS 1 ou des bytes de la clé électronique et la lecture du contenu de l'EPROM 9 décrivant de façon scriptée le contenu réel de la clé 8'.

Le microprocesseur central du jeu 6 doit posséder une mémoire propre 12 RAM C MOS 2 non volatile. Il compare les algorithmes de la clé 8' en se servant des paramètres cités dans l'EPROM 9. Si la clé 8' est valide, le microprocesseur 6 réécrit les chiffres et débloque le jeu.

La clé 8' est constituée d'une mémoire monolytique MMI du type PAL (Programmable arret logic) formant un réseau logique programmable, comportant 2048 fusibles 13 complétés par deux fusibles destinés à empêcher la relecture, une fois qu'ils sont détruits.

Lors de la mise sous tension du jeu, le microprocesseur central du jeu 6 effectue un test de clé qui consiste à lire l'EPROM-serrure, puis à lire et écrite de nombreuses fois la clé électronique 8' les algorithmes de la clé électronique en se servant des paramètres cités dans l'EPROM 9 en vue de s'assurer que la clé correspond bien à la serrure.

Si la clé insérée dans le connecteur est la bonne, le programme se déroule normalement. En outre, un FLAG 1 est armé.

Si la clé est absente ou non valide, le microprocesseur effectue un test de lecture de chiffres qui consiste à lire le contenu de la mémoire 5 non volatile RAM CMOS 1 et à comparer celui-ci avec une copie de ce contenu située dans la mémoire 12 RAM CMOS 2. Si les contenus des mémoires susdites 5 et 12 sont identiques, le programme se déroule normalement.

Si une différence est relevée, le programme se bloque sauf lorsque le FLAG 1 est armé. Dans ce cas, le microprocesseur central du jeu 6 effectue l'écriture des chiffres. Cette opération consiste à tirer au sort un ensemble de chiffres aléatoires et à les écrire successivement dans la mémoire 5 RAM CMOS 1 et dans la mémoire 12 RAM CMOS 2 ensuite.

Le dispositif permet de retirer la clé électronique qui se trouve à l'intérieur du jeu. Pour accéder à cette clé, il faut ouvrir une porte, qui en s'ouvrant, enclanche un contact électrique normalement ouvert. Ce contact électrique actionne un relais de commande 3 dont le relais inverseur 3' met à la masse l'alimentation de la mémoire 5 RAM CMOS 1, ce qui a pour effet de détruire les données contenues dans ladite mémoire 5.

Il en est de même de toute autre effraction entraînant l'enclanchement d'un contact électrique. L'excitation du relais de commande provoquera la destruction des chiffres écrits dans le mémoire 5 et donc le blocage du jeu.

Si l'effraction a lieu sans que le jeu ne soit sous tension, la batterie A garantit que les chiffres de la RAM CMOS 1 sont détruits, ce qui sera découvert à la prochaine mise sous tension.

La clé électronique permet de réarmer le dispositif de verrouillage et de débloquer le jeu. Elle n'est pas une simple mémoire. C'est un réseau logique programmable comportant des bistables avec possibilité de modifications internes ultérieures, qui font en sorte que la logique de l'ensemble est séquentielle et non statique, donc aussi très difficile à émuler.

Il est évident que l'invention n'est pas limitée à la forme de réalisation spécifique telle que représentée, de nombreuses modifications pouvant y être apportées sans la soustraire du cadre de l'invention déterminée par les revendications suivantes .

REVENDICATIONS
----------------

1. Dispositif de détection anti-effraction (1) comportant un ensemble 1 de contacts électriques (1', 1", 1'"), normalement ouverts, disposés aux endroits critiques d'effraction et raccordés en parallèle, par l'intermédiaire d'une source d'alimentation (2), à un relais de commande (3) d'un dispositif de verrouillage et/ou d'avertissement (4), constitué d'une mémoire statique (5) non volatile à accès aléatoire RAM CMOS 1, éventuellement alimenté par une batterie (5') indépendante du réseau, caractérisé en ce que ladite mémoire est raccordée par un bus (7) bidirectionnel à 8 bits à un microprocesseur central du jeu (6) apte à accéder à un dispositif de réarmement à) l'aide d'une clé électronique (8').

2. Dispositif suivant la revendication 1, caractérisé en ce qu'il comporte un ensemble comportant une clé électronique (8') constitué par un réseau logique programmable et un connecteur (7) constitué par un EPROM serrure (9) décrivant de pas en scriptée des algorithmes et les paramètres d'algorithmes de programmation du réseau logique de ladite clé (8').

3. Dispositif suivant l'une quelconque des revendications 1 et 2, caractérisé en ce que la clé électronique (8') est un réseau logique programmable comportant des bistables.

4.      Dispositif suivant l'une quelconque des revendications 1 à 3, caractérisé en ce que la clé électronique est constituée d'une mémoire monolytique MMI du type PAL (Programmable arret logic) comportant 2048 fusibles (13) complétés par deux fusibles spéciaux qui, une fois détruits, rendent la relecture de la clé impossible.

FIG. 1

+5V

RAM CMOS 2

0170644

# FIG. 2

13   13   13

Office européen
des brevets

**RAPPORT DE RECHERCHE EUROPEENNE**

**0170644**
Numéro de la demande

EP 85 87 0091

## DOCUMENTS CONSIDERES COMME PERTINENTS

| Catégorie | Citation du document avec indication, en cas de besoin des parties pertinentes | Revendication concernee | CLASSEMENT DE LA DEMANDE (Int Cl 4) |
|---|---|---|---|
| A | DE-A-3 023 427 (GRETAG) <br> * Page 7, ligne 1 - page 9, ligne 25; figure 1 * <br><br> --- | 1-2 | G 06 F 1/00 |
| A | ELECTRONIQUE INDUSTRIELLE, no. 73, 15 juin 1984, pages 77-78, Paris, FR; J. BLADOU: "Accroissement de la protection logicielle par les micro-ordinateurs à EEPROM" <br> * En entier * <br><br> --- | 1-2 | |
| A | IBM TECHNICAL DISCLOSURE BULLETIN, vol. 11, no. 12, mai 1969, pages 1773-1775, New York, US; J.W. FRANKLIN: "Security mechanism" <br> * En entier * <br><br> ----- | | |

**DOMAINES TECHNIQUES RECHERCHES (Int. Cl.4)**

G 06 F
G 08 B

Le présent rapport de recherche a été établi pour toutes les revendications

| Lieu de la recherche | Date d'achèvement de la recherche | Examinateur |
|---|---|---|
| LA HAYE | 11-10-1985 | SGURA S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82